# FASCICULE DE BREVET EUROPEEN

(11) **EP 2 344 387 B1**
(45) Date de publication et mention de la délivrance du brevet: **11.12.2013**
(21) Numéro de dépôt: 09756019.7
(22) Date de dépôt: 13.10.2009
(51) Int. Cl.: B64F 1/20, G01S 1/70, G08G 5/02

(54) **SYSTEME DE GUIDAGE D'UN DRONE EN PHASE D'APPROCHE D'UNE PLATE-FORME NOTAMMENT NAVALE EN VUE DE SON APPONTAGE**
SYSTEM ZUM STEUERN EINER DRONE WÄHREND DER ANNÄHERUNGSPHASE ZUR LANDUNG AUF EINER PLATTFORM, INSBESONDERE AUF SEE
SYSTEM FOR GUIDING A DRONE DURING THE APPROACH PHASE FOR LANDING A PLATFORM, IN PARTICULAR A NAVAL PLATFORM

(30) Priorité: 13.10.2008 FR 0856929
(43) Date de publication de la demande: 20.07.2011
(73) Titulaire: DCNS, 75015 Paris (FR)
(72) Inventeur: MORESVE, Julien, Pierre, Guillaume, F-29480 Le Relecq-Kerhuon (FR)
(74) Mandataire: Blot, Philippe Robert Emile
(86) Numéro de dépôt international: PCT/FR2009/051953
(87) Numéro de publication internationale: WO 2010/043815

(56) Documents cités:
- US-A- 3 704 070
- US-A- 3 885 876
- US-A- 4 209 768
- US-A- 4 345 310
- US-A- 5 287 104
- US-B1- 6 239 725

## Description

La présente invention concerne un système de guidage d'un drone en phase d'approche d'une plate-forme.

Plus particulièrement, l'invention concerne un système de guidage d'un tel drone en phase d'approche d'une plate-forme par exemple navale en particulier en vue de son appontage.

On sait que ce problème de guidage est un problème crucial qui a donné lieu à des développements depuis maintenant de très nombreuses années.

En effet, des solutions de guidage pour ce type d'applications à base de technologies GPS ou radar, ont déjà été proposées.

On connaît également, dans l'état de la technique, notamment d'après US 4 385 354, un système de guidage de drone conforme au préambule de la revendication 1, destiné à guider un drone pour son atterrissage sur terre ferme.

Par ailleurs, US 5 287 104 et US 6 239 725 décrivent des systèmes de guidage d'aéronefs pilotés pour leur appontage sur une plate-forme navale. Ces documents ne concernent toutefois pas le guidage d'un drone.

Cependant, dans le cadre de l'application particulière à une plate-forme navale, ces systèmes nécessitent la maîtrise de cette plate-forme et notamment la connaissance de ses mouvements et de ses équipements.

A ces problèmes, s'ajoute une difficulté pour garantir la récupération du drone, alors que la position de ce drone est souvent mesurée au GPS dont la disponibilité n'est pas garantie à chaque instant en raison des sauts de constellation, des multi trajets, ou encore des brouillages, etc ...

Le but de l'invention est donc de résoudre ces problèmes.

A cet effet l'invention a pour objet un système de guidage d'un drone selon la revendication 1.

Selon d'autres aspects de l'invention, le système de guidage comprend l'une ou plusieurs des caractéristiques suivantes :
- le premier faisceau est de couleur rouge, le deuxième faisceau de couleur verte et le troisième faisceau de couleur jaune,
- le premier faisceau présente un angle d'ouverture en élévation de 4°, le deuxième de 2° et le troisième de 8°,
- les moyens de calcul sont adaptés pour prendre en compte la vitesse de déplacement de la plate-forme.

L'invention concerne également un ensemble d'un drone et d'une plate forme navale selon la revendication 5.

L'invention sera mieux comprise à l'aide de la description qui va suivre donnée uniquement à titre d'exemple et faite en se référant aux dessins annexés sur lesquels :
- la figure 1 représente une plate-forme navale équipée d'une installation d'indicateur de pente de descente entrant dans la constitution d'un système de guidage selon l'invention,
- la figure 2 représente un éventail de faisceaux optiques émis par une telle installation,
- les figures 3, 4 et 5 illustrent la trajectoire idéale à suivre par un drone lors de son guidage, et
- la figure 6 illustre un schéma synoptique illustrant différents moyens intégrés dans un drone pour assurer ce suivi.

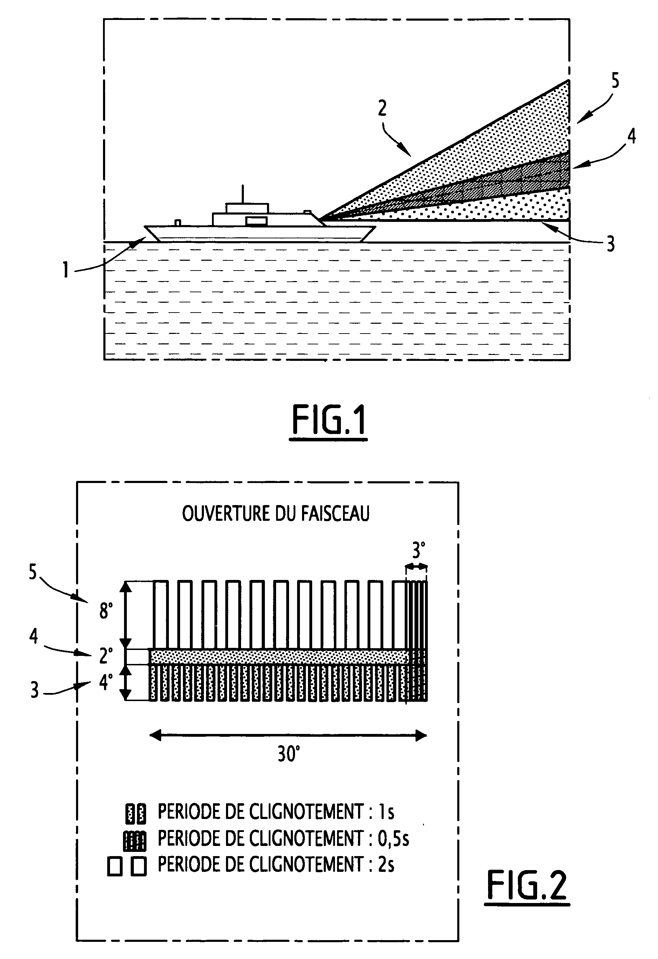

On a en effet illustré sur la figure 1, un système de guidage d'un drone en phase d'approche d'une plate-forme, notamment navale.

Cette plate-forme est désignée par la référence générale 1 sur cette figure et présente par exemple à l'arrière une zone d'appontage du drone.

En fait, cette plate-forme est équipée d'une installation d'indicateur de pente de descente, émettant un éventail de faisceaux optiques de guidage, sur un secteur angulaire prédéterminé à partir de l'horizontale.

De son côté, le drone est équipé d'une caméra d'acquisition de faisceaux, raccordée à des moyens d'analyse d'images et à des moyens de calcul d'ordres de commande à destination de moyens de pilotage automatique de ce drone, afin de l'amener à suivre les faisceaux de guidage.

Sur cette figure 1, l'éventail de faisceaux optiques de guidage est désigné par la référence générale 2.

En fait, l'éventail de faisceaux de guidage peut comporter trois faisceaux de couleurs différentes juxtaposées en élévation à partir de l'horizontale comme par exemple les faisceaux désignés par les références 3, 4 et 5 respectivement sur cette figure 1.

Le premier faisceau 3 peut alors être d'une couleur rouge, le deuxième faisceau 4 d'une couleur verte et le troisième faisceau 5 d'une couleur jaune.

De plus, le premier faisceau peut présenter un angle d'ouverture en élévation de 4°, le deuxième de 2° et le troisième de 8°.

Ces faisceaux peuvent également présenter un angle d'ouverture en gisement de 30°, ces faisceaux étant divisés en gisement, en un premier secteur angulaire bâbord de 27° et en un deuxième secteur angulaire de 3° à tribord du premier secteur bâbord.

Par ailleurs, les faisceaux, dans les différents secteurs ainsi définis, peuvent également clignoter avec des périodes différentes.

C'est ainsi par exemple que dans le premier secteur angulaire bâbord le faisceau rouge peut clignoter avec une période de 1 seconde, le faisceau vert ne clignote pas, tandis que le faisceau jaune peut clignoter avec une période de 2 secondes.

Dans le deuxième secteur angulaire tribord, tous les faisceaux clignotent avec une période de 0.5 seconde.

Ceci est schématisé sur la figure 2 où l'on reconnaît en effet les premier, deuxième et troisième faisceaux respectivement 3, 4 et 5 de couleurs rouge, verte et jaune respectivement.

On a également illustré sur cette figure 2, l'ouverture en gisement de 30° de ces faisceaux avec le premier secteur de 27° et le deuxième secteur de 3°.

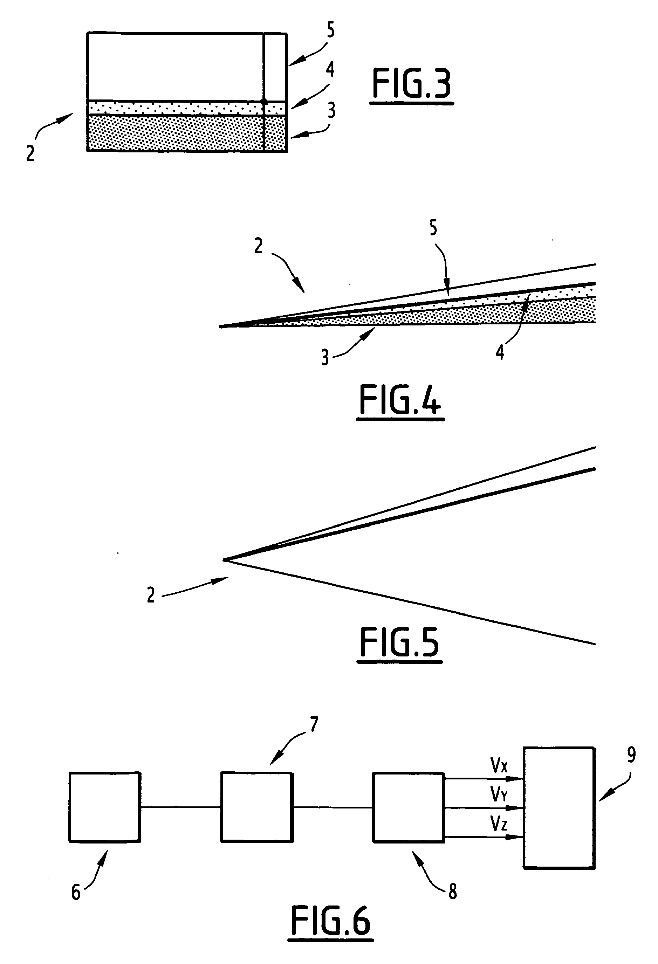

On conçoit alors, comme cela est illustré sur les figures 3, 4 et 5, que l'on peut définir une trajectoire idéale du drone en approche de la plate-forme, en lui faisant suivre un rail tel que celui illustré, en trait plus gras, sur ces figures, à la jonction entre les secteurs bâbord et tribord des deuxième et troisième faisceaux optiques.

A cet effet, le drone est équipé, comme cela est illustré sur la figure 6, d'une caméra d'acquisition de faisceaux désignée par la référence générale 6 sur cette figure, dont la sortie est raccordée à des moyens d'analyse d'images désignés par la référence générale 7.

Ces moyens d'analyse sont eux-mêmes raccordés à des moyens de calcul d'ordres de commande à destination de moyens de pilotage automatique du drone, afin de l'amener à suivre les faisceaux de guidage, les moyens de calcul d'ordres étant désignés par la référence générale 8 et les moyens de pilotage automatique du drone étant désignés par la référence générale 9.

On conçoit alors que cette chaîne permet aux moyens d'analyse d'images de délivrer aux moyens de calcul des informations de couleur du faisceau et de secteur déterminé à partir de la période de clignotement de celui-ci, telles que perçues par la caméra, de manière que les moyens de calcul des ordres de commande des moyens de pilotage automatique du drone établissent des vitesses longitudinale Vx, latérale Vy et ascensionnelle Vz de ce drone.

L'algorithme de calcul de ces différentes vitesses peut alors être le suivant :

Si la couleur du faisceau perçu est rouge, alors Vx = Vcruise*0.22 et Vz = Vzmax, Vcruise étant la vitesse de croisière du drone et Vzmax sa vitesse ascensionnelle maximale, ces vitesses étant prédéterminées en mètre/seconde par exemple par le constructeur du drone.

Par contre, si la couleur du faisceau perçu est verte, alors Vx = Vcruise*3/5 et Vz = Vzmax.

Enfin, si la couleur du faisceau perçu est jaune, alors Vx = Vcruise*3/5 et Vz = -Vzmax.

Par contre, si aucun faisceau n'est perçu, alors Vx = 0 et Vz = -Vzmax.

De même, si le secteur perçu est le premier secteur bâbord, alors Vy = -2 et si le secteur perçu est le deuxième secteur tribord alors Vy = 7.

Si aucun secteur n'est perçu, alors Vy est établi à 0.

On conçoit alors que ces ordres de pilotage permettent au drone de suivre, avec une précision plus ou moins importante la trajectoire idéale telle que définie précédemment.

On notera également que dans le cas où la plate-forme est un navire, tel que par exemple un navire de surface, l'installation d'indicateur de pente de descente est alors stabilisée en roulis et en tangage de façon classique.

De même, les moyens de calcul peuvent être adaptés pour prendre en compte la vitesse de déplacement de la plate-forme pour améliorer encore la précision du suivi de trajectoire.

On conçoit alors que dans un tel système, ces moyens permettent d'observer les clignotements de l'indicateur de pente de descente, à travers la caméra du drone puis de donner des ordres de vitesses longitudinale et latérale au drone pour qu'il suive la zone de transition des fréquences de cet indicateur de pente de descente comme un rail de descente à tenir.

La trajectoire réalisée peut alors être rapprochée de celle d'un hélicoptère en approche pour que les contrôles visuels de sécurité soient identiques pour l'officier aviation embarqué par exemple à bord de la plate-forme.

Un tel système est alors entièrement optique et permet de récupérer un drone dans une zone où le signal GPS peut éventuellement être brouillé volontairement ou d'une manière ou d'une autre rendu indisponible et ce, jusqu'à la portée optique d'un tel indicateur de pente de descente.

En cas de perte définitive de liaison entre la plate-forme et le drone ou encore de brouillage GPS, et si le drone est hors de portée optique, la plate-forme peut alors se déplacer pour aller le chercher en émettant l'éventail de faisceaux dans la direction estimée de celui-ci.

Dans le cas où l'installation d'indicateur de pente de descente est stabilisée en roulis et en tangage, la trajectoire de ce drone est également indépendante du roulis et du tangage de la plate-forme et en suivant le rail de descente, le drone rattrape alors le mouvement de lacet du navire.

D'une manière générale, on peut estimer qu'en finale la pente idéale de descente peut être établie à 4°.

Ce système permet alors de guider un drone d'un point de rendez-vous fixé en altitude et loin derrière la plate-forme, dans la mesure où l'installation d'indicateur de pente de descente peut avoir une portée de 1,5 NM jusqu'à un point où le drone est alors pris en charge par un capteur d'appontage de précision à courte portée.

Une telle installation permet également de ramener le drone sans liaison par exemple radio fréquence.

Il est également à noter qu'une amélioration de la précision de guidage peut être apportée de manière significative lorsque les moyens de calcul prennent en compte la vitesse de déplacement de la plate-forme.

En effet, l'erreur par rapport au rail de guidage optimal est alors plus stable.

Ceci permet de réduire la durée de la procédure d'appontage car le drone suit un chemin beaucoup plus direct et il y a moins d'oscillations de celui-ci autour du rail.

En fait, il est également à remarquer que la fréquence d'acquisition et de traitement de l'éventail de faisceaux joue un rôle très important dans la précision du guidage.

Des simulations ont validé un guidage d'un drone jusqu'à une distance de 20 mètres à l'arrière d'une frégate par mer force 5 avec une houle de 45° par l'arrière, le drone effectuant son approche à plus de 5 mètres par seconde.

On conçoit alors que ce système présente un certain nombre d'avantages par rapport aux structures déjà connues dans l'état de la technique.

Il va de soi bien entendu que bien que l'exemple de réalisation décrit concerne l'implantation d'une installation de ce type sur une plate-forme navale, le système selon l'invention peut également être appliqué à toute autre plate-forme d'atterrissage et que l'installation d'indicateur de pente de descente peut également être constituée par un module mobile pouvant être installé de manière provisoire et temporaire sur une plate-forme navale ou sur toute autre plate-forme, telle que par exemple une plate-forme terrestre d'atterrissage.

## Revendications

1. Système de guidage d'un drone en phase d'approche d'une plate-forme (1) en vue de son appontage, comportant une caméra (6), raccordée à des moyens (7) d'analyse d'images et à des moyens (8) de calcul d'ordres de commande à destination de moyens (9) de pilotage automatique du drone, lesdits caméra (6), moyens d'analyse (7) et moyens de calcul (8) étant installés sur le drone,
**caractérisé en ce que** :
- le système est destiné à équiper une plate-forme navale formée par un navire de surface (1),
- le système de guidage comporte un émetteur de faisceaux installé sur la plate-forme, ledit émetteur de faisceaux étant stabilisé en roulis et en tangage sur le navire, et ledit émetteur de faisceaux émettant un éventail (2) de faisceaux optiques de guidage sur un secteur angulaire prédéterminé à partir de l'horizontale, tel que :
- l'éventail de faisceaux de guidage comporte trois faisceaux (3, 4, 5) de couleurs différentes juxtaposés en élévation à partir de l'horizontale,
- les faisceaux présentent un angle d'ouverture en gisement de 30°,
- les faisceaux sont divisés en gisement en un premier secteur angulaire bâbord de 27° et en un deuxième secteur angulaire de 3° à tribord du premier secteur bâbord,
- dans le premier secteur angulaire bâbord, le premier faisceau (3) clignote avec une période de 1 seconde, le second faisceau (4) ne clignote pas et le troisième faisceau (5) clignote avec une période de 2 secondes, tandis que dans le deuxième secteur angulaire tribord tous les faisceaux (3, 4, 5) clignotent avec une période de 0,5 seconde,
- la caméra (6) est une caméra d'acquisition de faisceau, et elle est raccordée aux moyens (7) d'analyse d'images et aux moyens (8) de calcul d'ordres de commande afin d'amener le drone à suivre les faisceaux de guidage,
- les moyens (7) d'analyse d'images sont adaptés pour délivrer aux moyens de calcul (8) des informations de couleur du faisceau et de secteur déterminé à partir de la période de clignotement de celui-ci, perçues par la caméra (6) et **en ce que** les moyens de calcul (8) des ordres de commande des moyens de pilotage automatique du drone sont adaptés pour établir les vitesses longitudinale Vx, latérale Vy et ascensionnelle Vz de celui-ci, selon les relations suivantes :
- si la couleur du faisceau perçu est celle du premier faisceau, alors Vx=Vcruise* 0.22 et Vz=Vzmax, Vcruise étant la vitesse de croisière du drone et Vzmax sa vitesse ascensionnelle maximale, ces vitesses étant prédéterminées en m/s :
- si la couleur du faisceau perçu est celle du deuxième faisceau, alors Vx = Vcruise* 3/5 et Vz=Vzmax,
- si la couleur du faisceau perçu est celle du troisième faisceau, alors Vx=Vcruise* 3/5 et Vz=-Vzmax, et
- si aucun faisceau n'est perçu alors Vx= 0 et Vz =-Vzmax et,
- si le secteur perçu est le premier secteur bâbord, alors Vy=-2
- si le secteur perçu est le deuxième secteur tribord, alors Vy = 7, et
- si aucun secteur n'est perçu alors Vy = 0.

2. Système de guidage d'un drone en phase d'approche d'une plate-forme navale notamment en vue de son appontage selon la revendication 1, **caractérisé en ce que** le premier faisceau (3) est de couleur rouge, le deuxième faisceau (4) de couleur verte et le troisième faisceau (5) de couleur jaune.

3. Système de guidage d'un drone en phase d'approche d'une plate-forme navale notamment en vue de son appontage selon la revendication 1 ou 2, **caractérisé en ce que** le premier faisceau (3) présente un angle d'ouverture en élévation de 4°, le deuxième (4) de 2° et le troisième (5) de 8°.

4. Système de guidage d'un drone en phase d'approche d'une plate-forme navale notamment en vue de son appontage selon l'une quelconque des revendications précédentes, **caractérisé en ce que** les moyens de calcul (8) sont adaptés pour prendre en compte la vitesse de déplacement de la plate-forme.

5. Ensemble d'un drone et d'une plate-forme navale, **caractérisé en ce qu'**il comporte un système de guidage du drone en phase d'approche de la plate-forme en vue de son appontage selon l'une quelconque des revendications précédentes, et dans lequel :
- la plate-forme est équipée de l'émetteur de faisceaux, et
- le drone est équipé de la caméra (6), des moyens d'analyse (7) et des moyens de calcul (8).

## Patentansprüche

1. System zum Leiten einer Drohne in einer Phase eines Anflugs auf eine Plattform (1) zwecks ihrer Landung, aufweisend eine Kamera (6), welche angeschlossen ist an Mittel (7) zum Analysieren von Bildern und an Mittel (8) zum Berechnen von Ziel-Leitbefehlen der Mittel (9) zum automatischen Steuern der Drohne, wobei die Kamera (6), die Mittel zum Analysieren (7) und die Mittel zum Berechnen (8) an der Drohne installiert sind,
**dadurch gekennzeichnet, dass**:
- das System dazu vorgesehen ist, eine Schiffsplattform auszustatten, welche an einem Überwasserschiff (1) ausgebildet ist,
- das System zum Leiten eine Strahlenabstrahleinrichtung aufweist, welche auf der Plattform installiert ist, wobei die Strahlenabstrahleinrichtung auf dem Schiff roll- und stampfstabilisiert ist und wobei die Strahlenabstrahleinrichtung in einem vorbestimmten Winkelsektor ausgehend von der Horizontalen ein Spektrum (2) von optischen Strahlen zum Leiten abstrahlt, derart dass:
- das Spektrum der Strahlen zum Leiten drei Strahlen (3, 4, 5) von unterschiedlichen Farben aufweist, welche im Aufriss ausgehend von der Horizontalen aneinandergereiht sind,
- die Strahlen in Seitenpeilung einen Öffnungswinkel von 30° aufweisen,
- die Strahlen in Seitenpeilung in einen ersten, backbordseitigen Winkelsektor von 27° und in einen zweiten Winkelsektor von 3° nach Steuerbord von dem ersten, backbordseitigen Sektor aus geteilt sind,
- in dem ersten, backbordseitigen Winkelsektor der erste Strahl (3) mit einer Periode von 1 Sekunde blinkt, der zweite Strahl (4) nicht blinkt und der dritte Strahl (5) mit einer Periode von 2 Sekunden blinkt, wohingegen in dem zweiten, steuerbordseitigen Winkelsektor alle Strahlen (3, 4, 5) mit einer Periode von 0,5 Sekunden blinken,
- die Kamera (6) eine Kamera zum Erfassen der Strahlen ist, wobei sie angeschlossen ist an die Mittel (7) zum Analysieren von Bildern und an die Mittel (8) zum Berechnen der Leitbefehle, um die Drohne dazu zu bringen, den Strahlen zum Leiten zu folgen,
- die Mittel (7) zum Analysieren von Bildern dazu eingerichtet sind, um an die Mittel zum Berechnen (8) Informationen der Farbe des Strahls und des zu Beginn der Periode des Blinkens ermittelten Sektors von diesem auszugeben, welche durch die Kamera (6) erfasst werden, und dass die Mittel zum Berechnen (8) von Leitbefehlen der Mittel zum automatischen Steuern der Drohne dazu eingerichtet sind, die Längsgeschwindigkeit Vx, die seitliche Geschwindigkeit Vy und die Steiggeschwindigkeit Vz derselben gemäß den folgenden Beziehungen festzulegen:
- falls die Farbe des erfassten Strahls die des ersten Strahls ist, dann sind Vx=Vcruise * 0.22 und Vz = Vzmax, wobei Vcruise die Reisegeschwindigkeit der Drohne und Vzmax ihre maximale Steiggeschwindigkeit ist, wobei diese Geschwindigkeiten in m/s vorbestimmt sind:
- falls die Farbe des erfassten Strahls die des zweiten Strahls ist, dann ist Vx = Vcruise * 3/5 und Vz = Vzmax,
- falls die Farbe des erfassten Strahls die des dritten Strahls ist, dann ist Vx = Vcruise * 3/5 und Vz = -Vzmax, und
- falls kein Strahl erfasst wird, dann ist Vx=0 und Vz = - Vzmax und,
- falls der erfasste Sektor der erste, backbordseitige Sektor ist, dann ist Vy=-2,
- falls der erfasste Sektor der zweite, steuerbordseitige Sektor ist, dann ist Vy = 7, und
falls kein Sektor erfasst wird, dann ist Vy = 0.

2. System zum Leiten einer Drohne in einer Phase eines Anflugs auf eine Schiffsplattform insbesondere zwecks ihrer Landung gemäß Anspruch 1, **dadurch gekennzeichnet, dass** der erste Strahl (3) von der Farbe Rot ist, der zweite Strahl (4) von der Farbe Grün ist und der dritte Strahl (5) von der Farbe Gelb ist.

3. System zum Leiten einer Drohne in einer Phase eines Anflugs auf eine Schiffsplattform insbesondere zwecks ihrer Landung gemäß Anspruch 1 oder 2, **dadurch gekennzeichnet, dass** im Aufriss der erste Strahl (3) einen Öffnungswinkel von 4° aufweist, der zweite (4) von 2° und der dritte (5) von 8°.

4. System zum Leiten einer Drohne in einer Phase eines Anflugs auf eine Schiffsplattform insbesondere zwecks ihrer Landung gemäß irgendeinem der vorhergehenden Ansprüche, **dadurch gekennzeichnet, dass** die Mittel zum Berechnen (8) dazu eingerichtet sind, die Geschwindigkeit der Bewegung der Plattform zu berücksichtigen.

5. Einrichtung aus einer Drohne und einer Schiffsplattform, **dadurch gekennzeichnet, dass** sie ein System zum Leiten einer Drohne in einer Phase eines Anflugs auf eine Schiffsplattform insbesondere zwecks ihrer Landung gemäß irgendeinem der vorhergehenden Ansprüche aufweist, und bei welcher:
- die Plattform mit der Strahlenabstrahleinrichtung ausgestattet ist, und
- die Drohne mit der Kamera (6), den Mitteln zum Analysieren (7) und den Mitteln zum Berechnen (8) ausgestattet ist.

## Claims

1. A system for guiding a drone during the approach phase to a platform with a view to landing the same, comprising a camera (6) connected to image analysis means (7) and to computing means (8) of orders for the commanding of automatic piloting means (9) of the drone, said camera (6), analysis means (7) and computing means (8) being arranged on the drone,
**characterized in that**:
- the system is intended to equip a naval platform, formed by a surface vessel (1),
- the guiding system comprises an beam emitter arranged on the platform, said beam emitter being pitch and roll stabilised on the vessel, and said beam emitter emitting an array (2) of optical guide beams over an angular sector predetermined from the horizontal, so that:
• the array of guiding beams comprises three beams (3, 4, 5) of different colours juxtaposed in elevation from the horizontal,
• the beams have a beam azimuth angle of 30°,
• the azimuth angle of the beams is divided into a first port-side angular sector of 27° and a second angular sector 3° starboard from the first port-side sector,
• in the first port-side angular sector the first beam (3) flashes with a period of 1 second, the second beam (4) does not flash and the thrid beam (5) flashes with a period of 2 seconds, whilst in the second starboard angular sector all the beams (3, 4, 5) flash with a period of 0.5 second,
- the camera (6) is a beam acquisition camera, and it is connected to the image analysis means (7) and to the computing means (8) so that to cause the drone to follow the guide beams,
- the image analysis means (7) are adapted to deliver to the computing means (8) information on beam colour and information on sector determined from the flashing period thereof perceived by the camera (6), and **in that** the means (8) computing orders for commanding the automatic piloting means of the drone are adapted to determine the longitudinal Vx, lateral Vy and climb Vz velocities thereof, as per the following equations:
• if the colour of the perceived beam is the colour of the first beam, then Vx=Vcruise* 0.22 and Vz = Vzmax, Vcruise being the cruise velocity of the drone and Vzmax its maximum rate-of-climb, these velocities being predetermined in m/s,
• if the colour of the perceived beam is the colour of the second beam, then Vx = Vcruise* 3/5 and Vz = Vzmax,
• if the colour of the perceived beam is the colour of the third beam, then Vx=Vcruise* 3/5 and Vz = -Vzmax, and
• if no beam is perceived, then Vx= 0 and Vz = -Vzmax and,
• if the perceived sector is the first port-side sector, then Vy = -2
• if the perceived sector is the second starboard sector, then Vy = 7, and
• if no sector is perceived, then Vy = 0.

2. The system for guiding a drone during the approach phase to a naval platform, particularly with a view to landing the same according to claim 1, **characterized in that** the colour of the first beam (3) is red, the colour of the second beam (4) is green and the colour of the third beam (5) is yellow.

3. The system for guiding a drone during the approach phase to a naval platform, particularly with a view to landing the same according to claim 1 or 2, **characterized in that** the first beam (3) has a beam elevation angle of 4°, the second (4) of 2° and the third (5) of 8°.

4. The system for guiding a drone during the approach phase to a naval platform, particularly with a view to landing the same according to claim any of preceding claims, **characterized in that** the computing means (8) are adapted to take into account the rate of travel of the platform.

5. An assembly of a drone and a naval platform, **characterized in that** it comprises a system for guiding the drone during the approach phase to the naval platform with a view to landing the same according to any of preceding claims, and wherein:
- the platform is equipped with the beam emitter, and
- the drone is equipped with the camera (6), the analysis means (7) and the computing means (8).
